# EUROPEAN PATENT APPLICATION

(11) **EP 4 843 858 A1**
(43) Date of publication of application: **25.11.2026**
(21) Application number: 24918156.1
(22) Date of filing: 29.10.2024
(51) Int. Cl.: B60W 40/09

(54) **STEERING WHEEL HANDS-OFF DETECTION METHOD AND SYSTEM, AND VEHICLE**

(30) Priority: 15.01.2024 CN 202410059952
(71) Applicant: Yutong Bus Co., Ltd., Zhengzhou, Henan 450061 (CN)
(72) Inventor: YANG, Jianchong, Zhengzhou, Henan 450061 (CN); LI, Weiqi, Zhengzhou, Henan 450061 (CN); WU, Shuaijing, Zhengzhou, Henan 450061 (CN); GUO, Weiwei, Zhengzhou, Henan 450061 (CN); YANG, Zhilin, Zhengzhou, Henan 450061 (CN)
(74) Representative: Metida
(86) International application number: PCT/CN2024/128093
(87) International publication number: WO 2025/152547

(57) **Abstract**

The present application relates to a steering wheel hands-off detection method and system, and a vehicle, and belongs to technical field of intelligent vehicle interaction. According to the solution, a detection torque of a steering wheel used for hands-off detection is obtained during an intelligent driving process, then the detection torque is compared with a calibration torque to obtain a steering wheel hands-off detection result. The calibration torque is obtained by collecting steering wheel torques under a condition that hands of a driver are off the steering wheel during the intelligent driving process of the vehicle and performing statistical processing on the steering wheel torques.

## Description

### TECHNICAL FIELD

The present application relates to a steering wheel hands-off detection method and system, and a vehicle, belonging to the field of intelligent vehicle interaction technologies, and in particular, to a torque-based steering wheel hands-off detection method for assisted driving.

### BACKGROUND

At present, most intelligent driving systems are assisted driving systems below Level 3. To ensure safety, it is required that driver's hands cannot leave the steering wheel when an Advanced Driver Assistance System (ADAS) is engaged, so that the driver can take over control of the vehicle at any time in an emergency.

In response, most ADAS systems are equipped with Hands Off Detection (HOD), which is used to monitor whether the driver is holding the steering wheel. If both hands of the driver leave the steering wheel, an alarm is generated; if the steering wheel is not held for a long time, an intelligent driving function exits. Although it is not mandatory to configure HOD at present, it is highly likely that such a requirement will be written into national standards in the future.

At present, detection methods in the industry for steering wheel hands-off of a driver mainly include three ways: image-based visual recognition method, capacitive touch sensors disposed on steering wheel, and steering wheel torque-based recognition method. However, because the former two methods require installation of additional dedicated sensors, vehicle cost will increase. Moreover, performance of machine vision recognition method is easily affected by factors such as light and installation angle. The steering wheel torque-based recognition method can collect a steering wheel torque signal by using an electric power steering system built into the vehicle, and can be implemented without additional hardware cost. However, it is affected by the following two factors, resulting in low recognition accuracy.

1. When the driver lightly holds the steering wheel, compared with a hands-off state, a variation amplitude of the torque signal of the steering wheel is smaller and is affected by hardware precision, so that the state of the driver holding the steering wheel is difficult to distinguish, resulting in low determination accuracy and frequent switching of the determined state, thereby affecting an assisted driving experience.

2. Mechanical friction is generated in a steering system during steering of a vehicle. Especially for commercial vehicles, mechanical assembly errors are large, and the operating environment and working conditions are harsher than those of passenger vehicles, so that friction forces of steering systems of different vehicles, even of the same type vehicles, also differ greatly. After torque generated by the friction force is superimposed on the torque sensor, torque values in a driver hands-off state differ greatly among different vehicles, so that the same software algorithm is difficult to adapt to different vehicles, and recognition accuracy of different vehicles is uneven after mass production.

A Chinese invention patent application with publication No. CN115123296A discloses a steering wheel hands-off detection method. The solution uses a trained deep learning model to determine a detected steering wheel torque signal, thereby improving the accuracy of vehicle steering wheel hands-off detection. However, this approach relies on an artificial intelligence algorithm, which requires a large amount of measurement data for training and imposes relatively high hardware requirements for execution, making it not conducive to cost control.

A Chinese invention patent application with publication No. CN116161045A discloses a steering wheel hands-off detection method. In this solution, a hands-off state signal is first generated according to a system return torque value and an actual return torque value, which is a preliminary detection of whether the steering wheel is hands-off. On the basis of the hands-off state signal, the system combines it with a requested steering angle, a current steering angle and the actual return torque value of the steering wheel to jointly determine whether the steering wheel is in a hands-off state, thereby improving the accuracy of determining whether the steering wheel is hands-off. This solution determines that the steering wheel is in a hands-off state when a difference between the system return torque and the actual return torque exceeds a preset value a certain number of times and a duration of the difference reaches a preset time threshold. The determination process is complex and relies on more calibrated and real-time detected physical quantities, which is not conducive to improving detection accuracy.

### SUMMARY

An objective of the present application is to provide a steering wheel hands-off detection method and system, and vehicle, so as to solve the problem in the prior art that a hands-off detection determination process is complex.

To achieve the foregoing objective, the technical solutions of the present application include: A technical solution of a steering wheel hands-off detection method according to the present application: obtaining a detection torque value of a steering wheel used for hands-off detection during an intelligent driving process; and comparing the detection torque value with a calibration torque value to obtain a steering wheel hands-off detection result, where the calibration torque value is obtained by collecting steering wheel torques under a condition that hands of a driver are off the steering wheel during the intelligent driving process of a vehicle and performing statistical processing on the steering wheel torques.

Further, the comparing the detection torque value with the calibration torque value includes: subtracting the calibration torque value from the detection torque value to obtain a determination torque, comparing the determination torque with one or more preset thresholds, and determining that the steering wheel hands-off detection result is hands-off at least when the determination torque is less than a preset threshold, and determining that the steering wheel hands-off detection result is not hands-off at least when the determination torque is greater than a preset threshold.

Further, where when the determination torque is less than the preset threshold and reaches a preset time, the steering wheel hands-off detection result is determined to be hands-off.

Further, where within the preset time, if the determination torque becomes greater than the preset threshold again, the steering wheel hands-off detection result remains currently not hands-off.

Further, where when the determination torque is greater than the preset threshold and reaches a preset time, the steering wheel hands-off detection result is determined to be not hands-off.

Further, where within the preset time, if the determination torque becomes less than the preset threshold again, the steering wheel hands-off detection result remains currently hands-off.

Further, where the calibration process for obtaining the calibration torque is performed before the vehicle leaves a factory after production, or after the vehicle has run for a period of time.

Further, the statistical processing includes: calculating an average value of absolute values of collected steering wheel torques within a certain time, to obtain the calibration torque value.

Further, during a calibration process for obtaining the calibration torque value, a duration for which the vehicle is driven in an intelligent driving mode at least reaches a predetermined time threshold.

A technical solution of a steering wheel hands-off detection system according to the present application includes a processor, and the processor executes and implements the steering wheel hands-off detection method described above.

A technical solution of a vehicle according to the present application includes the steering wheel hands-off detection system described above.

The present application has the following beneficial effects.

For the problem of a low torque detection recognition rate mentioned in the background, based on the prior art, the present invention performs the following torque self-learning process before delivery from the factory or periodically. During an intelligent driving process of a vehicle, a steering wheel torque is collected when the driver's hand is off the steering wheel. Then the collected steering wheel torque is processed, and the processed torque is taken as a calibration torque value, where the calibration torque value is used to compensate for an actual detection value in an actual hands-off detection process. By using torque self-learning compensation, the present application eliminates the impact of friction torque of steering system caused by individual vehicle differences on steering wheel hands-off state detection, thereby improving the accuracy of steering wheel hands-off detection.

In addition, compared with the prior-art solutions listed in the Background, the solution of the present application is simple to implement and reliable, has low requirements for computing power, and does not require new hardware, thus having almost no impact on cost.

Furthermore, when the present application performs hands-off determination by using the detection torque value and the calibration torque value, a multi-state transition confirmation method is further used, further improving accuracy of detection result and avoiding frequent reminders or automatic exit of the intelligent driving caused by frequent state transitions, which would affect user experience.

### BRIEF DESCRIPTION OF THE DRAWINGS

FIG. 1 is a flowchart of a steering wheel hands-off detection method according to Embodiment 1 of the present application.
FIG. 2 is a schematic diagram of hands-off state detection determination logic according to Embodiment 1 of the present application.

### DETAILED DESCRIPTIONS OF THE EMBODIMENTS

In order to illustrate the objectives, technical solutions and advantages of the present application more clearly, the following further describes the present application in detail with reference to the accompanying drawings and embodiments.

According to the concept of the present application, during a driving process of a vehicle and under a condition of ensuring safety, the vehicle is controlled to enter an intelligent driving mode and drive for a period of time with the driver not holding the steering wheel. An intelligent driving system used to implement an intelligent driving function (for example, an ADAS) collects steering wheel torques during this period and performs statistical processing on the collected steering wheel torques, to obtain a system friction torque which can reflect a friction condition of the vehicle steering system. Since the friction condition of steering system varies due to assembly errors and operating environment, the system friction torque differs among different vehicle steering systems.

When the vehicle normally travels in the intelligent driving mode, the intelligent driving system takes the system friction torque as a reference, compares the system friction torque with a steering wheel torque value monitored in real time, and then performs determination after comparison. In this way, the problem of low accuracy of torque-based steering wheel hands-off detection caused by different steering system friction torques resulting from individual vehicle errors can be eliminated.

Moreover, the calibration and detection method of the present application has simple logic and high detection accuracy, so as to effectively avoid problems caused by detection errors, such as frequent alarms or repeated exits of the intelligent driving system, and greatly improve the intelligent driving and human-vehicle interaction experience without increasing hardware costs.

### Method Embodiment 1:

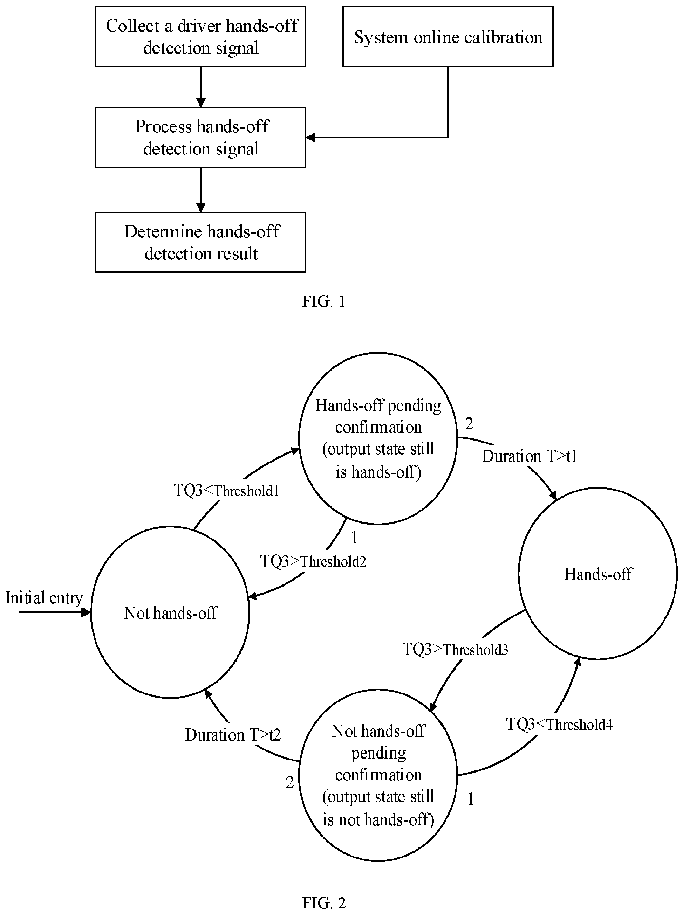

As shown in FIG. 1, a steering wheel hands-off detection method according to the embodiment includes the following steps.

### Step 1. System online calibration.

After the vehicle is produced and off an assembly line, dynamic calibration is performed on a steering wheel hands-off detection module of an intelligent driving system. Firstly, after a calibration state is triggered, a driver controls the vehicle to enter an intelligent driving mode. Next, on a dedicated site, a closed road section or an open road and under a condition of ensuring safety, the driver takes both hands off the steering wheel and drives using the intelligent driving function for a certain time t. The steering wheel hands-off detection module collects steering wheel torques during this period, calculates an average value of absolute values of the steering wheel torques during this period, and takes the average value as calibration torque value TQ1. The value (TQ1) mainly represents the system friction torque of the vehicle's steering system after the vehicle leaves the factory. Owing to assembly tolerances, the friction torque of the steering systems of different vehicles also varies. Then, the steering wheel hands-off detection module stores the calibration torque value TQ1 in non-volatile memory for subsequent system operation to read and call.

The intelligent driving mode/function referred to in this embodiment may include, automatic unmanned driving in which the vehicle is completely taken over by the vehicle intelligent driving system under various road traffic conditions, or may include assisted driving that does not require the driver to perform a steering operation. For example, adaptive cruise control or lane keeping under specific road conditions, or intelligent driving such as automatic parking into a parking space. In short, it is a scenario where the driver does not need to operate the steering wheel, but is still required to keep hands on the steering wheel to ensure driving safety.

Correspondingly, the intelligent driving system configured to implement the intelligent driving function may be an ADAS, or a hardware system that implements a single one of the functions described above, such as an adaptive cruise control system, a lane keeping system, or an automatic parking system. The hardware system may also be integrated into a vehicle controller or other vehicle controller, and this corresponding hardware system is the intelligent driving system in this embodiment.

The foregoing step is an online learning calibration process for the system. In the subsequent step: when the intelligent driving system takes over the vehicle and enters an actual driving process, the steering wheel hands-off detection module performs the actual driver hands-off detection step based on a stored calibration torque value TQ1, which reflects friction torque of the vehicle steering system.

### Step 2. Collection and processing of a driver hands-off detection signal.

During operation of the vehicle, when the vehicle is in the intelligent driving mode, that is, the intelligent driving system takes over the vehicle, the steering wheel hands-off detection module reads a steering wheel torque signal in real time through a steering wheel motor power-assist system, and then filters the torque signal to remove abnormal values and noise, thereby obtaining a filtered torque signal. Finally, it takes a torque absolute value corresponding to the filtered torque signal as a detection torque value TQ2 and calculates a determination torque value TQ3. The determination torque value TQ3 is equal to the detection torque value TQ2 minus the calibration torque value TQ1, that is: TQ3=TQ2-TQ1.

The obtained determination torque value TQ3 mainly reflects torque generated when the driver's hands hold the steering wheel.

As another implementation, the steering wheel torque signal in the online calibration process for the system may also be read from a torque sensor disposed on a steering column of the prior art. That is, the steering wheel torque may be collected by a torque-based steering wheel hands-off detection method employed in the vehicle.

### Step 3. Hands-off detection determination logic.

Based on the processed determination torque value TQ3, the steering wheel hands-off detection module performs hands-off detection determination logic. By designing state machine transition logic to perform hands-off detection determination based on the determination torque value TQ3, individual vehicle differences can be eliminated, thereby accurately identifying whether the driver's hands are off the steering wheel.

Specifically, as shown in FIG. 2, when the vehicle is controlled to enter the intelligent driving mode, the steering wheel hands-off detection module determines by default that the system enters a "not hands-off" state, namely the system initially enters the "not hands-off" state. When the processed determination torque value TQ3 is less than a first preset threshold Threshold1, the system enters a "hands-off pending confirmation" state, and at this time a signal output by a state machine to outside is still a not hands-off flag. During a waiting process in the "hands-off pending confirmation" state, if the determination torque value TQ3 becomes greater than a second preset threshold Threshold2, the system returns to the "not hands-off" state (transition direction 1 of the "hands-off pending confirmation" state shown in FIG. 2). When a duration T of the waiting process in the "hands-off pending confirmation" state is greater than a first time threshold t1, the system is determined to enter "hands-off" state (transition direction 2 of the "hands-off pending confirmation" state shown in FIG. 2), and the signal output by the state machine is the hands-off flag.

Logic for transferring the system from the "hands-off" state to the "not hands-off" state is similar. When the processed determination torque value TQ3 is greater than a third preset threshold Threshold3, the system enters a "not hands-off pending confirmation" state, and at this time the signal output by the state machine to outside is still a hands-off flag. During a waiting process in the "not hands-off pending confirmation" state, if the determination torque value TQ3 becomes less than a fourth preset threshold Threshold4, the system returns to the "hands-off" state (transition direction 1 of the "not hands-off pending confirmation" state shown in FIG. 2), When a duration T of the waiting process in the "not hands-off pending confirmation" state is greater than a second time threshold t2, the system is determined to enter "not hands-off" state (transition direction 2 of the "not hands-off pending confirmation" state shown in FIG. 2), and an external signal output by the state machine is the hands-off flag.

To avoid frequent and repeated state transitions, in the "not hands-off" state, the first preset threshold Threshold1 is less than the second preset threshold Threshold2. In the "hands-off" state, the third preset threshold Threshold3 is greater than the fourth preset threshold Threshold4. Between the first preset threshold Threshold1 and the second preset threshold Threshold2, which are used for determining a transition from the "not hands-off" state to the "hands-off" state, and the third preset threshold Threshold3 and the fourth preset threshold Threshold4, which are used for determining a transition from the "hands-off" state to the "not hands-off" state, a relative magnitude relationship of the threshold values may be set according to actual conditions, in consideration of detection sensitivity requirements. That is, balance adjustment can be performed based on a rate of missed detection and a rate of false detection.

The first time threshold t1 and the second time threshold t2 may also be set according to actual conditions.

In Step 1 of this embodiment, the calibration torque value is acquired using a torque self-learning compensation method to address the issue that, due to differences in mechanical friction forces of steering systems among different vehicles, friction torques generated by the friction forces are superimposed on a steering torque sensor, which will make it difficult for the same software algorithm to adapt to different vehicles, resulting in inconsistent recognition accuracy across different vehicles after mass production.

In addition, in the hands-off detection determination of Step 3, the state-machine transition logic for hands-off determination is adopted to solve the problems that, because a variation amplitude in torque before and after hands-off is small, conventional hands-off detection algorithms have low determination accuracy and tend to cause frequent switching of the determined state, thereby effectively reducing false alarms, and also enabling a balance between false alarms and missed detections to be achieved by adjusting thresholds.

### Method Embodiment 2:

The difference between this embodiment and Method Embodiment 1 is that Method Embodiment 1 performs online system calibration before the vehicle leaves an assembly line and a factory after final assembly. The method of the present application is not limited thereto, and may alternatively be performed as a maintenance item after the vehicle has been delivered and used by a user for a period of time, so as to recalibrate a steering system friction torque that changes after use and long-term operation. During a vehicle using process, especially commercial vehicles used under heavy load and in harsh environments in long-term, the friction torque of the steering system may change due to load and wear. Moreover, in harsh operating environments, heavy-duty trucks and engineering vehicles may also experience changes in steering damping because a grease between the steering mechanism components becomes contaminated by dust or deteriorates and ages due to cold, high temperature and high humidity conditions. All these will eventually be reflected in the friction torque, leading to changes in the friction torque of the steering system.

The method of the present application may also be used for recalibration after the vehicle is used for a period of time, when accuracy of torque-based steering wheel hands-off detection decreases due to changes in steering system friction torque.

Specifically, on a dedicated site, a closed road section or an open road, and under a condition of ensuring safety, the vehicle may be controlled to enter a calibration state using the same triggering method and calibration method as in Method Embodiment 1, to recalibrate the calibration torque value TQ1. After a new calibration torque value TQ1 is obtained through recalibration, the original calibration torque value is overwritten.

Subsequent collection and processing of the driver hands-off detection signal during use of the vehicle and the hands-off detection determination logic are the same as those in Method Embodiment 1, and details are not described herein again.

### Method Embodiment 3:

The difference between this embodiment and Method Embodiment 1 is only that the hands-off detection determination logic in Step 3 may alternatively use other determination logic. For example, one simpler determination threshold may be set. When the processed determination torque value TQ3 is less than the determination threshold and reaches a preset time, the system is determined to enter the "hands-off" state and outputs the hands-off flag. Within the preset time, if the determination torque value TQ3 becomes greater than the determination threshold, the system is still in the "not hands-off" state and will not output the hands-off flag.

In the "hands-off" state, if the processed determination torque value TQ3 is greater than the determination threshold and reaches a preset time, the system is determined to enter the "not hands-off" state and outputs the not-hands-off flag. Within the preset time, if the determination torque value TQ3 becomes less than the determination threshold, the system is still in the "hands-off" state and will not output the not hands-off flag.

Alternatively, two determination thresholds may be set, namely a first threshold and a second threshold greater than the first threshold. When the processed determination torque value TQ3 is less than the smaller first threshold, the system is determined to enter the "hands-off" state and outputs the hands-off flag. In the "hands-off" state, when the processed determination torque value TQ3 is greater than the larger second threshold, the system is determined to enter the "not hands-off" state and outputs the not hands-off flag. The second threshold is set greater than the first threshold to avoid frequent and repeated transitions.

### System Embodiment:

An intelligent driving system in this embodiment is used to implement unmanned automatic driving or assisted driving that does not require the driver to operate a steering wheel. After the intelligent driving system takes over a vehicle, the driver is still required to hold the steering wheel to ensure driving safety, and the intelligent driving system is equipped with a steering wheel hands-off detection module. The steering wheel hands-off detection module implements driver steering wheel hands-off detection in the intelligent driving mode using the steering wheel hands-off detection method of the present application. The specific steering wheel hands-off detection method has been described sufficiently clearly in the method embodiments, and details are not described herein again.

### Vehicle Embodiment:

A vehicle in this embodiment has an intelligent driving function, which is implemented by the intelligent driving system described in the system embodiment.

## Claims

1. A steering wheel hands-off detection method, comprising:
obtaining a detection torque value of a steering wheel used for hands-off detection during an intelligent driving process; and
comparing the detection torque value with a calibration torque value to obtain a steering wheel hands-off detection result, wherein the calibration torque value is obtained by collecting steering wheel torques under a condition that hands of a driver are off the steering wheel during the intelligent driving process of a vehicle and performing statistical processing on the steering wheel torques.

2. The steering wheel hands-off detection method according to claim 1, wherein the comparing the detection torque value with the calibration torque value comprises:
subtracting the calibration torque value from the detection torque value to obtain a determination torque;
comparing the determination torque with one or more preset thresholds; and
determining that the steering wheel hands-off detection result is hands-off at least when the determination torque is less than a preset threshold, and determining that the steering wheel hands-off detection result is not hands-off at least when the determination torque is greater than a preset threshold.

3. The steering wheel hands-off detection method according to claim 2, wherein when the determination torque is less than the preset threshold and reaches a preset time, the steering wheel hands-off detection result is determined to be hands-off.

4. The steering wheel hands-off detection method according to claim 3, wherein within the preset time, if the determination torque becomes greater than the preset threshold again, the steering wheel hands-off detection result remains currently not hands-off.

5. The steering wheel hands-off detection method according to claim 2, wherein when the determination torque is greater than the preset threshold and reaches a preset time, the steering wheel hands-off detection result is determined to be not hands-off.

6. The steering wheel hands-off detection method according to claim 5, wherein within the preset time, if the determination torque becomes less than the preset threshold again, the steering wheel hands-off detection result remains currently hands-off.

7. The steering wheel hands-off detection method according to claim 1, wherein the calibration process for obtaining the calibration torque is performed before the vehicle leaves a factory after production, or after the vehicle has run for a period of time.

8. The steering wheel hands-off detection method according to claim 1, wherein the statistical processing comprises:
calculating an average value of absolute values of collected steering wheel torques within a certain time, to obtain the calibration torque value.

9. The steering wheel hands-off detection method according to claim 1, wherein during a calibration process for obtaining the calibration torque value, a duration for which the vehicle is driven in an intelligent driving mode at least reaches a predetermined time threshold.

10. A steering wheel hands-off detection system, comprising a processor, wherein the processor is configured to execute and implement the steering wheel hands-off detection method according to any one of claims 1 to 9.

11. A vehicle, comprising the steering wheel hands-off detection system according to claim 10.
